(19) **Europäisches Patentamt**

**European Patent Office**

**Office européen des brevets**

(11) **EP 0 993 105 B1**

(12) **EUROPEAN PATENT SPECIFICATION**

(45) Date of publication and mention
of the grant of the patent:
**08.01.2003 Bulletin 2003/02**

(51) Int Cl.⁷: **H02M 3/335**

(21) Application number: **98830591.8**

(22) Date of filing: **07.10.1998**

(54) **Control of power transfer in a flyback converter by modulating the off-phase in function of the load**

Leistungsübertragungssteueurung in Sperrwandler durch lastabhängige Austastmodulation

Contrôle du transfert de puissance au sein d'un convertisseur Flyback, par modulation de la phase OFF en fonction de la charge

(84) Designated Contracting States:
**DE FR GB IT**

(43) Date of publication of application:
**12.04.2000 Bulletin 2000/15**

(73) Proprietor: **STMicroelectronics S.r.l.**
**20041 Agrate Brianza (Milano) (IT)**

(72) Inventors:
• **Lionetto, Antonio**
**95125 Catania (IT)**
• **Occhipinti, Luigi**
**97100 Ragusa (IT)**
• **Spampinato, Sergio Tommaso**
**95127 Catania (IT)**
• **Caponetto, Riccardo**
**95100 Catania (IT)**

(74) Representative: **Pellegri, Alberto et al**
**c/o Società Italiana Brevetti S.p.A.**
**Piazza Repubblica, 5**
**21100 Varese (IT)**

(56) References cited:
**US-A- 4 984 145**   **US-A- 5 657 215**
**US-A- 5 748 461**

**Description**

FIELD OF APPLICATION OF THE INVENTION

The invention relates to flyback DC-DC converters.

TECHNOLOGICAL BACKGROUND

Intense research and development efforts are being done for improving and making even more adaptable to different important sectors of application integrated power supplies based on the use of DC-DC converters. Indeed, these power supplies, besides a high performance in terms of response to load transients and broad stability range, provide for an excellent static and dynamic behavior, in line with rules on containment of electromagnetic pollution, etc..

Particularly in VCR, TV, receivers and satellite decoders and similar consumer products, the quest is of minimizing the inventory of circuit components for reducing the cost of these appliances.

In recent years, many specially designed devices have been produced and marketed to serve these economically important applications. World leader manufacturers of electronic components such as STMicroelectronics market a wide spectrum range of monolithically integrated and hybrid devices designed to handle output powers of 30 to 300 W.

Yet, ever stricter requisites imposed on such integrated devices and enactment of severe specifications of the performances, often requires a substantially customization of the product in order to simplify layouts and reduce the number of components necessary to realize the power supply and costs.

In a broad range of consumer products, the configuration most frequently used is that of a so-called flyback self-oscillating power supply (SOPS).

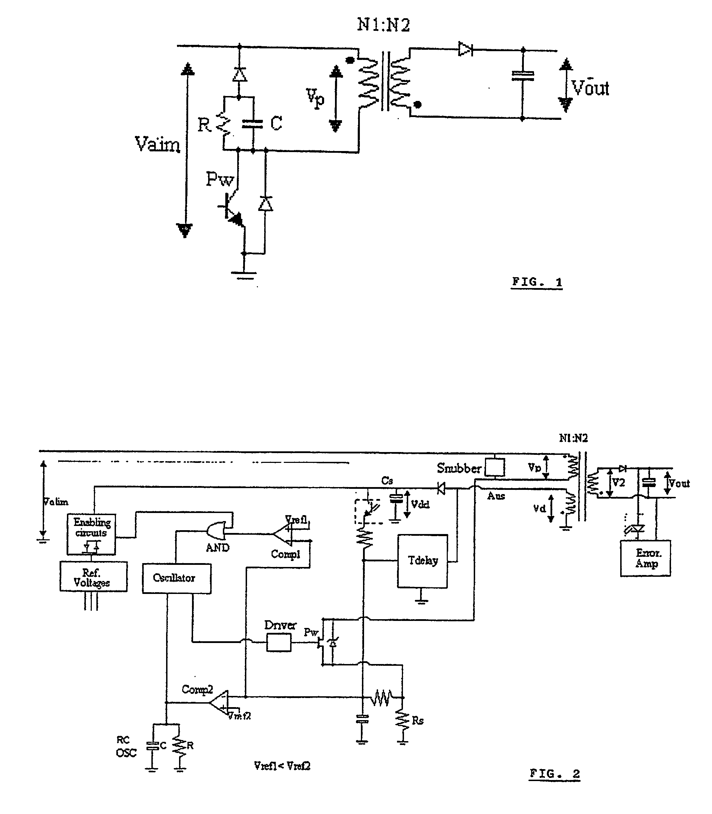

A typical flyback scheme is shown in Fig. 1. This basic scheme of DC-DC converter circuit provides for a good control of power transfer with a switching frequency in the vicinity of about 100 kHz, requires the use of a relatively small flyback transformer and ensures a high efficiency in transferring power from the primary circuit to the secondary or output circuit.

Generally, in a SOPS converter a variable frequency control is implemented wherein the conduction phase ($T_{ON}$) of the power switch that drives the primary winding (phase of energy storing in the flyback transformer) is limited, as in a PWM system, by the maximum current and by the output voltage error, while the duration of the phase of nonconduction ($T_{OFF}$) (phase of transfer of the stored energy to the load connected to the output) is determined by the applied load.

To this purpose, the zero-cross event of the voltage induced by the current flowing in the secondary winding on a third or auxiliary winding is detected and a consequent logic signal of acknowledgment of the occurrence of such a zero-cross event turns on the power switch and starts a new conduction phase.

Fig. 2 shows the scheme of a flyback SOPS produced and marketed by Sanken Electric in which the auxiliary winding (Aus) is exploited to power the control circuits of the converter.

By way of a delay network Tdelay, that is commonly realized with external discrete components, the switchings of the comparator (Comp2) are synchronized with the null voltage condition on the current terminals of the power switch, in order to turn on the power switch in a condition of quasi-resonance so to avoid a classic flyback hard switching mode of operation of the converter.

The SOPS control, intrinsically a variable frequency type of control, forces the flyback converter to function close to the limit between a discontinuous mode (zeroing of the current in the primary during an off phase) and a continuous mode wherein in the primary winding a current continues to flow during an off phase of the power switch.

The (secondary) control loop, composed of the output voltage error amplifier ERROR AMPLIFIER, whose output is photocoupled by way of a photodiode and a phototransistor to the inputs of the comparators COMP1 and COMP2, the RC OSC network and the OSC block, intervenes to control the variations of the output voltage Vout, that occurs in function of the transfer of energy stored in the flyback transformer to the load. Therefore it is unable to handle the start-up phase, that is the charging transient of the whole capacitance coupled to the converter output.

This inability is commonly overcome by implementing another (primary) control loop by way of the comparator COMP1, the block ENABLING CIRCUITS and the logic AND gate and using a fixed frequency oscillator OSC, enabled by said other primary control loop, to turn on the power switch Pw with the rising front of a fixed frequency clock signal provided by the OSC oscillator, so to permit the start-up of the flyback converter until it reaches an output voltage sufficiently high to cause the passage to a proper self oscillating mode of operation.

In practice, during the start-up phase, the OSC oscillator imposes an off phase ($T_{OFF}$) of fixed duration, according to a Pulse Ratio Control (PRC) mode of operation.

Commonly, the OSC oscillator frequency is set by the RC-OSC network that is made of external components, to a value lower than the self-oscillating frequency of the flyback converter during its steady state functioning. This ensures, at a steady state, a discontinuous mode of a self-oscillating converter (SOPS), which is intrinsically a most controllable mode of operation.

Normally, in a SOPS system, when the load applied to the output decreases the switching frequency increases and this increments the losses due to the switchings of the power switch.

Moreover, the unavoidable delays of the secondary control loop during the self-oscillating steady state functioning of the SOPS and the turn-off times typical of DMOS transistors, commonly used as power switches, dictate a minimum turn-on time ($T_{ON}$) of the converter and therefore a certain minimum quantity of stored energy in the transformer during each turn-on phase. This energy is totally transferred to the load. If the load absorbs an amount of energy lower than said certain minimum which is any case transferred, the output filter capacitor overcharges and therefore the output voltage Vout increases.

In these circumstances, the control system may only intervene by turning off the converter. This is done by disabling by way of dedicated ENABLING CIRCUITS the turning on of the Pω switch until the Vout drops below than a certain threshold. This determines a so-called burst mode of functioning, during which the SOPS converter functions by alternating periods of normal functioning with periods in which the switch is kept off.

Due to inevitable delays and to the turn-off time of the power transistor, SOPS are not suitable to supply relatively small loads and/or for prolonged stand-by conditions. For these applications, a control system capable of limiting the power transferred to the output in more effective way such as for example a fixed frequency control, is commonly preferred.

Normally, in many applications, when the load is reduced to stand-by conditions, a fixed frequency mode of control is enabled, in order to facilitate the control and reduce losses.

The consequent decrease of the energy transferred to the output, and the limitation of the overshoot of the output voltage may indeed reestablish the conditions for a transition to an variable frequency SOPS control mode which in turn may cause a new overshoot of the output voltage. The converter may then "oscillate" between two modes of control: the variable frequency SOPS control and the fixed frequency control (at the frequency of the start-up and recovery oscillator).

Under these conditions, the current supplied by the error amplifier of the output voltage and consequently the current that flows in the power switch take a waveform, that is they present a sequence of peaks and lows.

A similar behavior may be observed when the load of the converter is subject to an abrupt step-wise drop. Even in this case, the abrupt discontinuity of the load level induces a marked overshoot followed by an undulatory decay pattern of the current profiles of the error amplifier and of the power switch.

These behaviors as well as a burst mode of operation cause inefficiencies and remarkably increase the electromagnetic noise produced by the converter.

OBJECT AND SUMMARY OF THE INVENTION

A solution to the above noted drawbacks and limitations of known SOPS systems has now been found. Apart from markedly attenuating the undulatory decaying of currents following an abrupt reduction of the load and averting repeated transitions from a self-oscillating mode to a fixed frequency mode of operation of the converter, the present invention practically prevents a burst mode of functioning of the converter.

This important result is obtained, according to the present invention, by controlling the power transferred through the flyback transformer, by modulating the duration of the off phase of the power switch in function of a combination of current operation parameters of the converter in order to maintain the converter in a SOPS functioning mode until reaching limit output voltage conditions such to determine the transition from a self-oscillating mode to a fixed oscillator frequency mode. On one hand, this prevents an intermittent or burst mode functioning of the converter and on the other hand this limits the voltage overshoot phenomena and the consequent decay transients upon a transition from a SOPS control to a fixed frequency control and/or abrupt reduction of the load (stand-by).

According to a preferred embodiment of the invention, the modulation of the duration of the off phase of the power switch while substantially preserving a SOPS functioning mode of the converter, is implemented by adding a circuit block that modulates the off interval suitably coupled between the output of the bistable control circuit and the driver stage of the power transistor of the converter.

Fundamentally, the approach of the invention is to introduce a modulation of the amount of energy transferred to the output by forcing the converter, during control transients and its steady state functioning, to operate in a more or less discontinuous manner compared to a limit condition of self-oscillating mode, thus introducing an effective modulation of the gain of the converter in function of the applied load.

This is done by controlling the off interval which, while leaving the converter functioning in a SOPS mode, makes it to function in a so-called PRC mode, whereby the off interval is determined by input parameter signals of the control system of the converter.

A modulation of the energy transfer is obtained that even under low load conditions, stabilizes the functioning of the converter, practically eliminating the burst mode and limiting the overshoot at transitions between self-oscillating mode and fixed frequency mode.

The discontinuity represented by this transition between the two functioning modes (self-oscillating and fixed frequency) is more efficiently handled by such a modulation that acts for maintaining constant the output voltage.

Moreover, by acting directly upon the energy transfer and limiting the overshoots a notable increment of the fastness of response of the converter is observed.

The invention is more clearly defined in the appended claims 1 and 3 and particularly preferred embodiments are defined in the dependent subsequent claims.

BRIEF DESCRIPTION OF THE DRAWINGS

Figure 1 is a basic scheme of a flyback DC-DC converter.

Figure 2 is a comprehensive diagram of a flyback SOPS.

Figure 3 is a diagram of a flyback SOPS converter made according to the present invention.

Figure 4 is a detailed diagram of the modulating block of the diagram of Fig. 3.

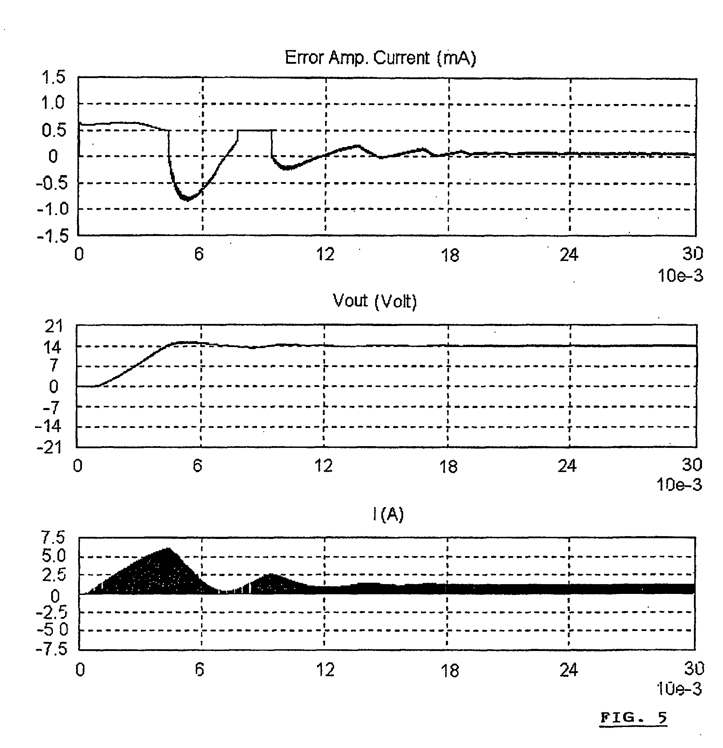

Figure 5 shows the waveforms of the significant signals of a converter of Fig. 3.

Figures 6, 7 and 8 show the waveform of the significant signals, including the response to a stepwise variation of the load converter shown in Fig. 3, with and without the modulating block of the invention.

DESCRIPTION OF AN EMBODIMENT OF THE INVENTION

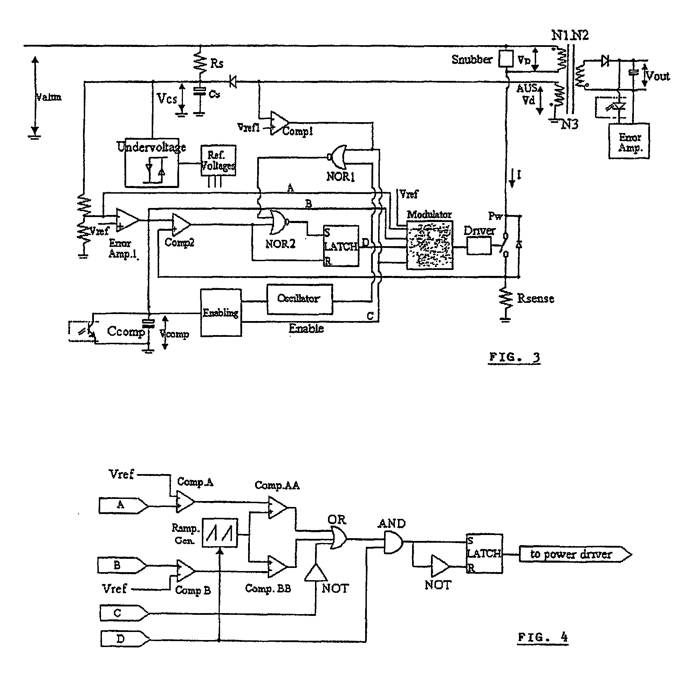

The embodiment shown in Fig. 3 is one among possible forms of realization the proposed invention. It relates to a flyback converter destined to function in two modes:

a) at a fixed frequency normally of a low value (around 16÷20 kHz); this functioning mode is automatically commanded by the control circuit when a relatively low output power is required, such as for example during a stand-by condition of TV sets or VCRs;

b) in a self-oscillating SOPS mode when under nominal power conditions of operation of the converter. Even this functioning mode is automatically commanded by the control circuit. The latter functioning mode does not represent the only condition in which the invention may be advantageously implemented by way of introducing a modulation of the duty cycle, indeed the invention remains effective also during a phase of operation at frequency using a switching frequency between 100 and 200 Khz for reaching up to the maximum level of power transfer to the load.

For an architecture as that shown in Fig. 3, the start-up and the recovery phases are managed by the circuit UNDERVOLTAGE, similarly to known architectures. Such a circuit disables the voltage sources of the block REF. VOLTAGES until reaching a positive threshold Vcs(H). Thereby, it is possible to charge the supply capacitor Cs with a low current which may be supplied, as shown in Fig. 3, through a resistor Rs of adequate value and dissipation characteristics. Otherwise an initial charging of Cs may be arranged through an integrated network.

Once the threshold Vcs(H) is reached, the UNDERVOLTAGE circuit enables, with a certain hysteresis the control circuits of the converter. This discharges the capacitor Cs. If the voltage on the Cs terminals drops below a positive threshold Vcs(L), lower than Vcs(H), the UNDERVOLTAGE circuit will disable again the powering of the control circuitry, allowing for a recharging of the Cs capacitor. The electric charge stored in Cs is sufficient to ensure the completion of several switching cycles of the converter and therefore an energy transfer to the output and to the auxiliary circuits.

Under steady state conditions, the voltage Vcs is kept higher than the Vcs(L) threshold by the current delivered by the auxiliary winding AUS during an OFF phase of the power switch, which, in Fig. 3 is represented by a switch driven by the stage DRIVER.

The output voltage Vout is controlled by two different control loops.

1) Primary control loop

The primary loop controls, by means of a voltage divider and an error amplifier ERROR AMP1 having its inverting input (-) coupled to a tap of the voltage divider, the Vcs voltage of self-powering of the control circuitry. Such a voltage Vcs is tied to the output voltage Vout by the turn ratio N2:N3 of the transformer, thereby depending on the characteristics of the transformer. The primary control loop does not have a high precision, but it has the advantage of not requiring external circuits.

2) Secondary control loop

The secondary loop directly controls the output voltage Vout by means of an error amplifier ERROR AMP and an optocoupling to the VCOMP pin of the integrated control circuitry of the converter thus ensuring electrical isolation of the DC output voltage of the converter from the circuits linked to the VALIM supply voltage (rectified mains voltage).

Such a control provides for a high precision. For this reason it is implemented in a large number of applications even though it requires the use of external components and has a higher cost.

For both modes, compensation of the control loop is provided by a $C_{COMP}$ capacitor, generally connected externally.

Through the comparator COMP2, the VCOMP voltage present on the compensation capacitor CCOMP controls the turn-off of the power switch according to the following formula:

$$VCOMP = RSENSE*1$$

This occurs by enabling a logic state "1" on the reset R of the bistable circuit LATCH.

The logic gate NOR2 guarantees the predominance of the reset signal R on the set signal S in order to avert a possible condition of indetermination.

In self-oscillating converters the switching frequency of the converter is variable and depends on the applied load.

The turn-off phase of the power switch, OFF phase, lasts until a complete transfer to the output circuit of the energy stored in the transformer during the preceding conducting phase of the power switch, ON phase, has occurred.

Once this transfer is completed, the voltages at the terminals of the transformer tend to nullify themselves.

In known converters such a tendency is exploited to command the turning on of the power switch and the beginning of a new, ON phase, to store energy in the transformer. The energy stored in the primary winding inductance L1 of the transformer during the ON phase is given by:

$$\frac{L_1 I^2}{2}$$

and the output power, being the energy stored totally transferred, is :

$$\eta * \frac{L_1 I^2 f}{2}$$

where $\eta$ is the efficiency of the converter and *f* is the switching frequency that is determined by the load conditions.

The less is the applied load the higher is *f*, because both the ON phase and the OFF phase are short in view of the fact that the load requires less power.

The minimum switch-off and switch-on time intervals of the power switch are imposed by the geometry of the device. This implies that even for very low loads or under stand-by conditions, a minimum storage of energy occurs in the transformer, energy that is eventually transferred to the load during the OFF phase.

If the load absorbs less than this minimum energy transfer, the self-oscillating converter enters into a "Burst Mode" of operation characterized by few active switching cycles that cause an overshoot of the output voltage are followed by an interval of time during which switching-on of the power switch is disabled ($V_{COMP}$ voltage made null) until the overshoot of the output voltage has decayed.

If the load absorbs required a power lower than the power dissipated by the control circuitry of the converter, a functioning mode referred to as "Bad Burst Mode" may take place, in which the turn-off interval of the power switch becomes so long as to discharge the Cs capacitance which continues to power the integrated circuitry to a voltage below the Vcs(L) threshold, thus imposing a new start-up and recovery phase.

The present invention permits to establish automatically a fixed frequency functioning mode for low loads and a self-oscillating functioning mode that substantially prevents either a Bad Burst Mode and even a Burst Mode.

An excess voltage condition at the output of the converter is reported by the above described feedback loops in form of a decrease of the VCOMP voltage. Under a certain threshold, the ENABLING block activates, according to the present invention, the fixed frequency functioning mode.

During the initial start-up phase and/or a recovery phase of the device, the CCOMP capacitor is discharged in a substantially state and the voltage VCOMP on its terminals is approximately zero; this determines that the initial functioning mode of the converter be at a fixed frequency.

During this fixed frequency functioning mode, the ENABLE signal is placed to a logic level "0", thus determining through the logic operator NORI the predominance of the signal generated by the block OSCILLATOR.

During the OFF phase, being the power switch "open", the COMP2 output places to a logic level "0" the reset "R" of the bistable circuit LATCH, while the rising front of the fixed frequency signal generated by the block OSCILLATOR imposes a logic level "1" to the set "S" of the LATCH which brings its output to a logic level "1". In this functioning mode such a logic level causes (through the MODULATOR block and the DRIVER block) the "closing" of the power switch and the beginning of a successive ON phase.

During a self-oscillating functioning mode, the ENABLING block imposes a logic level "1" to the ENABLE signal and disables the OSCILLATOR block which brings its output to a logic "0". This determines the predominance of the signa output by the COMP1 comparator through the logic operator NOR1. At the instant the voltage on the transformer windings becomes null (that is, when completing the transfer to the output of the energy stored in the transformer during the preceding ON phase), the output of the COMP1 block is set to a logic level "1", determining, as during operation at a fixed frequency, the switch of the output of the bistable current LATCH to a logic level "1".

Without the MODULATOR block, such a condition would cause the turning on of power switch, even in this functioning mode.

In the preferred embodiment of the invention shown in Fig. 3, the MODULATOR block limits the overshoot of the output voltage as well as its effect by speeding up the response of the converter to intervening load variations while permitting a correct and gradual transition between the two functioning modes.

The MODULATOR block may have a functional architecture as shown in Fig. 4. Its intervention is caused by the signal A which represents the Vcs (primary loop variable) and by the signal B which represents the VCOMP (secondary loop variable).

The other signals input to the MODULATOR block are:

- the C signal, that is, the signal that was already defined ENABLE in relation to the diagram of Fig. 3; its logic level "0" commands a fixed frequency functioning mode, its logic level "1" commands a self-oscillating functioning mode;
- the D signal, that is, the output of the bistable circuit LATCH of Fig. 3; its logic level "0" causes the turning-off of the power switch, its logic level "1" causes the immediate turning on of the power switch during a fixed frequency functioning mode. In a self-oscillating mode, the MODULATOR block introduces a delay on the switch-on signal (D=1) of the power switch of a magnitude that depends on the overvoltage condition of the output.

The two signals A and B are compared with respective references in the COMPA and COMPB blocks, the output of each of these two blocks is compared to a ramp signal synchronous with the D signal (power turn-on signal) in the COMPAA and COMPBB blocks, respectively.

The logic block OR allows for:

- enabling the MODULATOR block when the inverse of the signal C (obtained through the NOT gate) is at a logic level "0", that is, the ENABLE signal is at level "1";
- operating a timewise modulation depending on the monitoring of more control variables (Vcs and VCOMP).

The output of the AND gate combining the output of the OR gate with the power switch turn-on signal D, drives the bistable circuit LATCH of Fig. 4, whose output controls the stage driver of the power switch.

The set signal is predominant in the LATCH circuit.

According to this invention, the modulation block MODULATOR may be advantageously introduced in power supplies with a duty cycle control.

The modulation block and related logics of the invention may be similarly used in control loops operating either in voltage mode or in the current mode.

Generally, such a time modulation block will be functionally introduced upstream of the actuators (driver stage and the like) and when it is enabled it will adequately delay the switching on of the power switch by an interval that is determined by the functioning condition, regardless of the type of control mode being currently used.

Should the load no longer absorb the entire energy transferred to the output in a SOPS system (which inevitably takes place in a start-up phase) the output voltage will increase causing the intervention of both the conventional control circuitry as well as the modulation block of the invention.

In this way, the transfer of energy to the output is reduced by effectively lowering the gain of the converter circuit, thus limiting the overshoot of the output voltage, whereas the conventional control circuitry, because of nonnegligible response times, would lead to substantial overshoots.

This combination of effects of the conventional control system and of the auxiliary time modulation of the invention, outstandingly stabilizes the output voltage and cause a gradual disabling of the modulation block of the invention allowing on one hand the fullest transfer of energy while on the other hand limiting overshoots.

The output voltage Vout is kept within a restricted range thanks to the action of the modulation block of the invention. The control circuit of the converter, by coming out of an overshoot through a markedly damped oscillations, due to the output capacitance and to the characteristics of the output voltage error amplifier, quickly stabilizes to the new steady state condition.

Indeed, the initial overshoot that occurs with a traditional control circuit allows to stabilize the converter of the invention in case of relatively low loads.

During stand-by conditions, that is, for load levels that cannot not be stably supplied in a self-oscillating mode (for the reasons already described above), the converter automatically passes to function in a fixed frequency mode.

Even in this situation, where the converter may temporarily turn itself off because of the overshoot, the action of the modulator introduced according to the present invention stabilizes and keeps the output voltage within a small range during the entire transient.

According to the present invention:

a) a modulation of the energy transfer is introduced only in a phase of regulation, and therefore it acts on the transients making the converter overcome the noted drawbacks, thus extending the stability range regardless of the functioning mode with which the system reaches a steady state;

1) for the correct functioning of the modulation block, it is sufficient to exploit signals that are already used in a common control circuit of the converter without requiring additional external circuits and components;

2) the modulating action is undertaken by controlling the $T_{OFF}$ time, practically adding itself to the normal control of the time $T_{ON}$, thus overcoming exceeding the limits imposed by the presence of switching delays in the common control loop.

The following are some of the important advantages of the invention:

1) the modulation block may be easily introduced in the circuit architecture of a traditional control circuit and integrated with it;

2) the control on the energy transfer acts on the transfer function depending on the load conditions, compensating the negative effects of abrupt load variations without requiring the introduction of sensors of the current delivered to the load;

3) the invention may be applied to regulators having different functioning modes and/or of different type; in particular the architecture of the invention may be used to support the action of a FUZZY control replacing a traditional control circuit of the converter;

4) the limiting of the energy transfer operated by the modulator block of the invention takes place only during the transients, without affecting in any way the maximum steady state transfer allowed by the type of converter and relative control;

5) the discontinuity between the self-oscillating functioning mode and the fixed frequency functioning mode is substantially eliminated. This reduces in the electromagnetic noises produced by the converter;

6) the response speed of the converter is enhanced;

7) there is an extension of the self-oscillating functioning mode toward relatively lower levels of load, thus substantially preventing the burst mode and the bad burst mode;

8) the fixed frequency functioning at extremely low loads is outstandingly stable;

9) a combination of effects of the primary control loop (feedforward: variables referred to an auxiliary winding of the transformer) and of the secondary control loop (feedback: variables proportional to the output voltage) is advantageously implemented according to the invention.

The invention has been tested and simulated on a functional model realized in a SIMULINK (TM) environment. This has permitted the reproduction of the waveforms of the significant current and voltage signals and a comparison between the behaviors of the converter with and without the modulator of the invention.

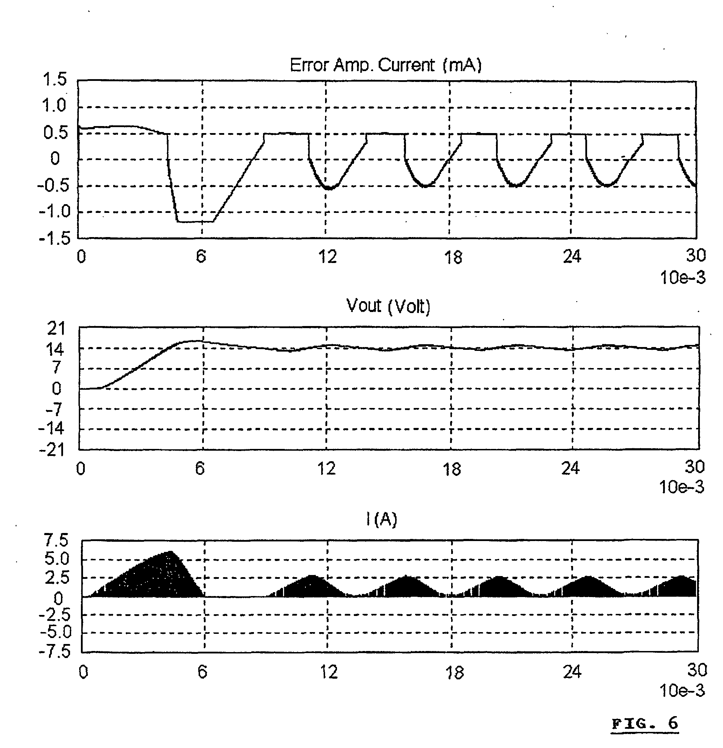

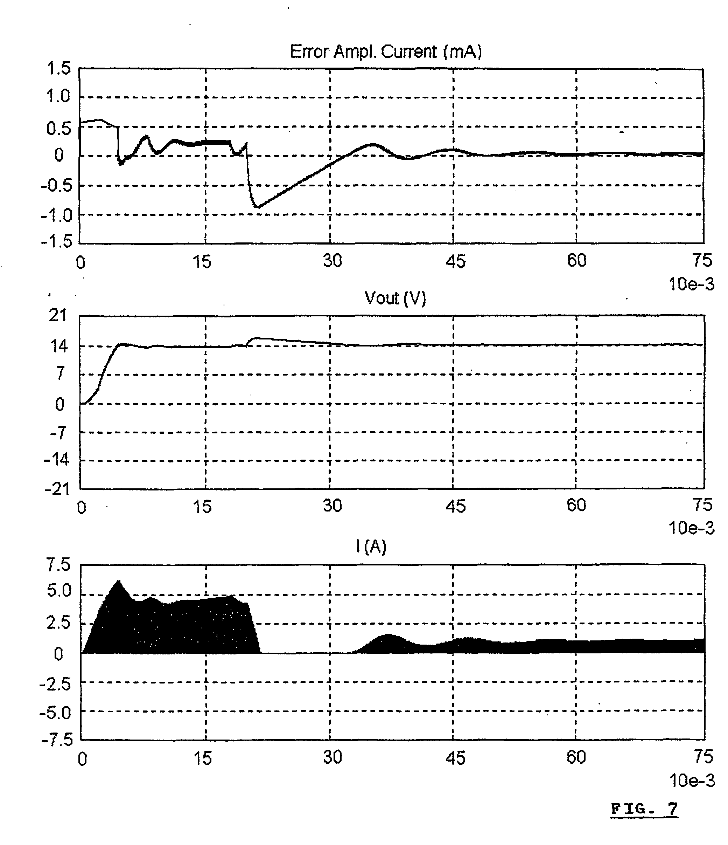

Fig. 6 depicts the waveforms of the current output by the error amplifier of the output voltage and of the current through the power switch at start-up, with an applied load of about 40W under the control of the primary loop, of the flyback switching converter of in Fig. 3, in which the energy transfer modulator block MODULATOR of the invention had been introduced. For the same testing conditions, Fig. 7 shows the waveforms of the same signals without a modulator block of the invention.

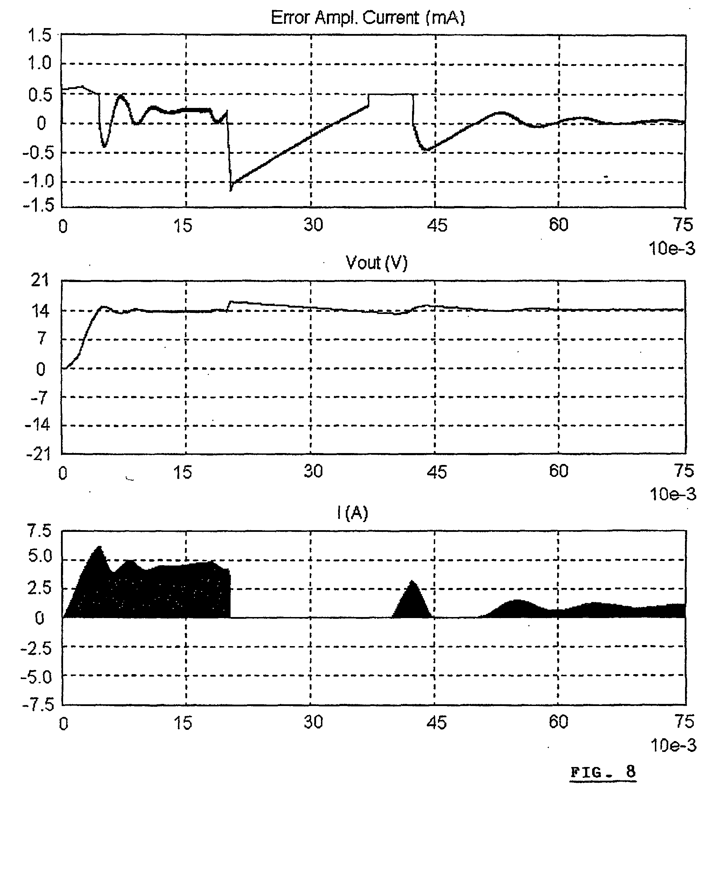

Figures 8 and 9 show the waveforms of the same signals for a converter with and without the modulator block, respectively, these waveforms highlight the transient that occurs at start-up with a 200W load, until about 20ms, and upon a stepwise is reduction of the load to about 4W.

**Claims**

1. A method for controlling a flyback DC-DC converter, self-oscillating under steady-state conditions, comprising a transformer for storing and transferring energy to a load, the transformer including a primary winding, a secondary winding and an auxiliary winding having a voltage induced by current in the secondary winding, a power switch connected to the primary winding, an output filter capacitor, and a fixed frequency oscillator having a frequency lower than a self-oscillating frequency control mode of the converter for a start-up charge transient of the output filter capacitor, the flyback DC-DC converter operating in a fixed frequency control mode for a low load, the method comprising:

monitoring the auxiliary winding to regulate an amount of energy transferred for enabling the power switch driving the primary winding, enabling the power switch for a new conduction and energy storage phase, and **characterised by** controlling the amount of energy transferred from the primary winding to the secondary winding by introducing a delay to a turn-on instant of the power switch with respect to a turn-on command generated during the self-oscillating frequency control mode and modulating the power switch off time as a function of an overshoot of an output voltage on the secondary winding during both the fixed frequency control mode and the self-oscillating frequency control mode.

2. A DC-DC flyback converter, self-oscillating under steady-state conditions, comprising:

a transformer (N1,N2,N3) including a primary, secondary and an auxiliary winding (AUS); a control circuit comprising a supply capacitor (Cs) being charged by the auxiliary winding (AUS); a hysteresis circuit (Undervoltage) for enabling said control circuit when a voltage (Vcs) on said supply capacitor (Cs) exceeds a certain threshold; a power switch (Pw) for driving the primary winding;

a primary control loop for enabling said power switch (Pw) comprising

a driver stage (Driver) connected to said power switch (Pw), a first error amplifier (Error Amp1) having a first input (-) receiving the voltage across said supply capacitor, and a second input (+) receiving a first reference voltage (Vref), a first comparator (Comp2) for comparing a voltage proportional to current flowing through said power switch (Pw) with an output voltage from said first error amplifier (Error Amp1), and

a bistable circuit (Latch) connected to said first comparator (Comp2) for controlling said driver stage (Driver);

a secondary control loop connected to the secondary winding comprising

a second error amplifier (Error Amp) having a first input receiving an output voltage (Vout) across the secondary winding, and a second input receiving a second voltage reference,

a photocoupler means for connecting an output of said second error amplifier (Error Amp) to an input of said first comparator (Comp2),

a fixed frequency oscillator (Oscillator) having a frequency lower than a frequency of the DC-DC converter self-oscillating under steady state conditions,

an enabling circuit (Enabling) connected between said photocoupler means and said fixed frequency oscillator (Oscillator) for enabling said fixed frequency oscillator (Oscillator),

a second comparator (Comp1) having an input connected to the auxiliary winding (AUS) to detect a zero crossing of a voltage (Vd) induced on the auxiliary winding (AUS) by current flowing in the secondary winding,

first and second logic circuits (NOR1,NOR2) establishing priority of a set signal input to said bistable circuit (Latch) over a signal output by said first comparator

(Comp2), and over a signal output by said first logic circuit (NOR1) having inputs receiving signals output by said second comparator (Comp1) and by said fixed frequency oscillator (Oscillator) ;

and **characterised in that** it further comprises
a modulator circuit (Modulator) connected between an output (D) of said bistable circuit (Latch) and an input of said driver stage (Driver) for introducing a delay on a turn-on instant of said power switch (Pw) with respect to a turn-on command (D) output by said bistable circuit (Latch) responsive to an enabling signal (C) generated by said enabling circuit (Enabling), and an input signal of said first error amplifier (Error Amp1), and a voltage (Vcomp) across said photocoupler.

3. A DC-DC converter according to claim 2, wherein said modulator circuit (Modulator) comprises:

a third comparator (Comp A) for comparing a voltage (A) at an input of said first error amplifier (Error Amp1) with the first reference voltage (Vref) ;

a fourth comparator (Comp B) for comparing an error voltage (B) at an output of said first error amplifier (Error Amp1) with the first reference voltage (Vref);

a ramp generator (Ramp Gen) activated by the turn-on command (D) provided at an output of said bistable circuit (Latch);

a fifth comparator (Comp AA) for comparing an output of said third comparator (Comp A) with an output of said ramp generator (Ramp Gen);

a sixth comparator (Comp BB) for comparing an output of said fourth comparator (Comp B) with the output of said ramp generator (Ramp Gen) ;

a first logic gate (OR) having inputs coupled to the outputs of said fifth and sixth comparators (Comp AA,Comp BB) and a third input coupled to the inverted signal (NOT) output by said circuit (Enabling) ;

an output bistable circuit (Latch) having a set input (S) coupled to the output of a second logic gate (AND) having an input coupled to the output of said first logic gate (OR) and a second input coupled to said turn-on command (D) and a reset input (R) driven by the inverted output signal of said second logic gate (AND);

the output of said bistable circuit (Latch) being coupled to the input of a driving stage (Driver) of the power switch (Pw).

**Patentansprüche**

1. Verfahren zum Steuern eines Zeilen-Gleichspannungswandlers, der unter eingeschwungenen Zustandsbedingungen selbst oszilliert, mit einem Transformator zum Speichern und Übertragen von Energie zu einer Last, welcher Transformator eine Primärwicklung, eine Sekundärwicklung und eine Hilfswicklung, die eine durch Strom in der Sekundärwicklung induzierte Spannung hat, enthält, einem mit der Primärwicklung verbundenen Leistungsschalter, einem Ausgangsfilter-Kondensator und einem Oszillator mit fester Frequenz, der eine niedrigere Frequenz als ein selbstoszillierender Frequenzsteuerbetrieb des Wandlers für einen Anfangs-Ladungsübergang des Ausgangsfilter-Kondensators hat, wobei der Zeilen-Gleichspannungswandler in einem Steuerbetrieb mit fester Frequenz für eine geringe Last arbeitet, welches Verfahren aufweist:

Überwachen der Hilfswicklung, um eine Menge der übertragenen Energie zu regeln für die Einschaltung des die Primärwicklung speisenden Leistungsschalters,

Einschalten des Leistungsschalters für eine neue Leitungs- und Energiespeicherphase, und **gekennzeichnet durch**

Steuern der Menge der von der Primärwicklung zu der Sekundärwicklung übertragenen Energie **durch** Einführung einer Verzögerung für einen Einschaltzeitpunkt des Leistungsschalters mit Bezug auf einen Einschaltbefehl, der während des selbstoszillierenden Frequenzsteuerbetriebs erzeugt wurde, und Modulieren der Leistungsschalter-Ausschaltzeit als eine Funktion eines Überschwingens einer Ausgangsspannung an der Sekundärwicklung während sowohl des Steuerbetriebs mit fester Frequenz als auch des Steuerbetriebs mit selbstoszillierender Frequenz.

2. Zeilen-Gleichspannungswandler, der unter eingeschwungenen Zustandsbedingungen selbst oszilliert, aufweisend:

einen Transformator (N1, N2, N3) enthaltend eine Primär-, Sekundär- und Hilfswicklung (AUS);

eine Steuerschaltung mit einem Zuführungskondensator (Cs), der durch die Hilfswicklung (AUS) geladen wird;

eine Hystereseschaltung (Unterspannung) zum Einschalten der Steuerschaltung, wenn eine Spannung (Vcs) an dem Zuführungskondensator (Cs) einen bestimmten Schwellenwert überschreitet;

einen Leistungsschalter (Pw) zum Speisen der Primärwicklung;

eine Primärsteuerschleife zum Einschalten des Leistungsschalters (Pw), aufweisend

eine Treiberstufe (Driver), die mit dem Leistungsschalter (Pw) verbunden ist, einen ersten Fehlerverstärker (Error Amp1) mit einem ersten Eingang (-), welcher die Spannung an dem Zuführungskondensator empfängt, und einen zweiten Eingang (+), welcher eine erste Bezugsspannung (Vref) empfängt,

einen ersten Komparator (Comp2) zum Vergleichen einer zu dem durch den Leistungsschalter (Pw) fließenden Strom proportionalen Spannung mit einer Ausgangsspannung des ersten Fehlerverstärkers (Error Amp1), und eine bistabile Schaltung (Latch), die mit den ersten Komparator (Comp2) verbunden ist, um die Treiberstufe (Driver) zu steuern;

eine mit der Sekundärwicklung verbundene Sekundärsteuerschleife, aufweisend

einen zweiten Fehlerverstärker (Error Amp) mit einem ersten Eingang, der eine Ausgangsspannung (Vout) über der Sekundärwicklung empfängt, und einem zweiten Eingang, der eine zweite Bezugsspannung empfängt, eine Fotokopplervorrichtung zum Verbinden eines Ausgangs des zweiten Fehlerverstärkers (Error Amp) mit einem Eingang des ersten Komparators (Comp2),

einen Oszillator mit fester Frequenz (Oscillator), der eine Frequenz hat, die niedriger als eine Frequenz der Selbstoszillation des Gleichspannungswandlers unter eingeschwungenen Zustandsbedingungen ist,

eine Freigabeschaltung (Enabling), die zwischen die Fotokopplervorrichtung und den Oszillator mit fester Frequenz (Oscillator) geschaltet ist, um den Oszillator mit fester Frequenz (Oscillator) einzuschalten,

einen zweiten Komparator (Compl) mit einem Eingang, der mit der Hilfswicklung (AUS) verbunden ist, um einen Nulldurchgang einer in der Hilfswicklung (AUS) durch den in der Sekundärwicklung fließenden Strom induzierten Spannung (Vd) zu erfassen,

eine erste und eine zweite logische Schaltung (NOR1, NOR2), die eine Priorität eines in die bistabile Schaltung (Latch) eingegebenen Setzsignals gegenüber einem von dem ersten Komparator (Comp2) ausgegebenen Signal und gegenüber einem von der ersten logischen Schaltung (NOR1), welche Eingänge hat, die von dem zweiten Komparator (Compl) und von dem Oszillator mit fester Frequenz (Oscillator) ausgegebene Signale empfangen, ausgegebenen Signal herstellen;

und **dadurch gekennzeichnet, dass** er weiterhin aufweist:

eine zwischen einen Ausgang (D) der bistabilen Schaltung (Latch) und einen Eingang der Treiberstufe (Driver) geschaltete Modulatorschaltung (Modulator), um eine Verzögerung für einen Einschalt-Zeitpunkt des Leistungsschalters (Pw) mit Bezug auf einen Einschaltbefehl (D), der von der bistabilen Schaltung (Latch) in Abhängigkeit von einem von der Freigabeschaltung (Enabling) erzeugten Freigabesignal (C) ausgegeben wurde, und mit Bezug auf ein Eingangssignal des ersten Fehlerverstärkers (Error Amp1) und eine Spannung (Vcomp) über den Fotokoppler einzuführen.

3. Gleichspannungswandler nach Anspruch 2, in welchem die Modulatorschaltung (Modulator) aufweist:

einen dritten Komparator (Comp A) zum Vergleichen einer Spannung (A) an einem Eingang des ersten Fehlerverstärkers (Error Amp1) mit der ersten Bezugsspannung (Vref);

einen vierten Komparator (Comp B) zum Vergleichen einer Fehlerspannung (B) an einem Ausgang des ersten Fehlerverstärkers (Error Amp1) mit der ersten Bezugsspannung (Vref);

einen Sägezahngenerator (Ramp Gen), der von dem Einschaltbefehl (B), welcher an einem Ausgang der bistabilen Schaltung (Latch) zur Verfügung gestellt wird, aktiviert wird;

einen fünften Komparator (Comp AA) zum Vergleichen eines Ausgangssignals des dritten Komparators (Comp A) mit einem Ausgangssignal des Sägezahngenerators (Ramp Gen);

einen sechsten Komparator (Comp BB) zum Vergleichen eines Ausgangssignals des vierten Komparators (Comp B) mit dem Ausgangssignal des Sägezahngenerators (Ramp Gen);

ein erstes logisches Gatter (OR) mit Eingängen, die mit den Ausgängen des fünften und des sechsten Komparators (Com AA, Comp BB) gekoppelt sind, und einem dritten Eingang, der mit dem invertierten Signal (NOT) gekoppelt ist, das von der besagten Schaltung (Enabling) ausgegeben wird;

eine bistabile Ausgangsschaltung (Latch) mit einem Setzeingang (S), der mit dem Ausgang eines zweiten logischen Gatters (AND) mit einem mit dem Ausgang des ersten logischen Gatters (OR) gekoppelten Eingang gekoppelt ist, und einem zweiten Eingang, der mit dem Einschaltbefehl (D) gekoppelt ist, und einem Rücksetzeingang (R), der von dem invertierten Ausgangssignal des zweiten logischen Gatters (AND) betrieben wird; wobei der Ausgang der bistabilen Schaltung (Latch) mit dem Eingang einer Treiberstufe (Driver) des Leistungsschalters (Pw) gekoppelt ist.

**Revendications**

1.  Procédé de commande d'un convertisseur continu-continu à accumulation, auto-oscillant dans des conditions d'état stable, comprenant un transformateur pour stocker et transférer de l'énergie vers une charge, le transformateur comprenant un enroulement primaire, un enroulement secondaire et un enroulement auxiliaire dans lequel une tension est induite par un courant dans l'enroulement secondaire, un commutateur de puissance connecté à l'enroulement primaire, un condensateur de sortie de filtrage, et un oscillateur à fréquence fixe ayant une fréquence inférieure à un mode de commande de fréquence auto-oscillante du convertisseur pour un transitoire de charge de démarrage du condensateur de filtrage de sortie, le convertisseur continu-continu à accumulation fonctionnant dans un mode de commande à fréquence fixe pour une faible charge, ce procédé comprenant les étapes suivantes :

surveiller l'enroulement auxiliaire pour réguler la quantité d'énergie transférée pour permettre au commutateur de puissance de piloter l'enroulement primaire ;

valider le commutateur de puissance pour une nouvelle phase de conduction et de stockage d'énergie, et **caractérisé par** :

commander la quantité d'énergie transférée de l'enroulement primaire à l'enroulement secondaire en introduisant un retard à l'instant de mise en conduction du commutateur de puissance par rapport à un ordre de mise en conduction dans le mode de commande de fréquence auto-oscillante et moduler la durée de coupure du commutateur de puissance en fonction d'un dépassement de la tension de sortie sur l'enroulement secondaire dans le mode de commande à fréquence fixe et dans le mode de commande de fréquence auto-oscillante.

2.  Convertisseur continu-continu à accumulation auto-oscillant dans des conditions d'état stable comprenant :

un transformateur (N1, N2, N3) comprenant des enroulements primaire, secondaire et auxiliaire (AUS) ;

un circuit de commande comprenant un condensateur d'alimentation (Cs) chargé par l'enroulement auxiliaire (AUS) ;

un circuit à hystérésis (Undervoltage) pour valider le circuit de commande quand la tension (Vcs) sur le condensateur d'alimentation (Cs) dépasse un certain seuil ;

un commutateur de puissance (Pw) pour valider l'enroulement primaire ;

une boucle de commande primaire pour valider le commutateur de puissance (Pw), comprenant :

un étage pilote (Driver) connecté au commutateur de puissance (Pw),

un premier amplificateur d'erreur (Error Amp 1) ayant une première entrée (-) recevant la tension aux bornes du condensateur d'alimentation et une seconde entrée (+) recevant une première tension de référence (Vref),

un premier comparateur (Comp2) pour comparer une tension proportionnelle au courant circulant dans le commutateur de puissance (Pw) à une tension de sortie en provenance du premier amplificateur d'erreur (Error Amp1), et

un circuit bistable (Latch) connecté au premier comparateur (Comp2) pour commander l'étage pilote (Driver) ;

une boucle de commande secondaire connectée à l'enroulement secondaire comprenant :

un second amplificateur d'erreur (Error Amp) ayant une première entrée recevant une tension de sortie (Vout) aux bornes de l'enroulement secondaire et une seconde entrée recevant une seconde référence de tension,

un moyen de photo-coupleur pour connecter une sortie du second amplificateur d'erreur (Error Amp) à une entrée du premier comparateur (Comp 2),

un oscillateur à fréquence fixe (Oscillator) ayant une fréquence inférieure à la fréquence du convertisseur continu-continu auto-oscillant dans des conditions d'état stable,

un circuit de validation (Enabling) connecté entre le moyen de photo-coupleur et l'oscillateur à fréquence fixe (Oscillator) pour valider l'oscillateur à fréquence fixe (Oscillator),

un second comparateur (Comp1) ayant une entrée connectée à l'enroulement auxiliaire (AUS) pour détecter un passage à zéro d'une tension (Vd) induite sur l'enroulement auxiliaire (AUS) par un courant circulant dans l'enroulement secondaire,

des premier et second circuits logiques (NOR1, NOR2) établissant la priorité d'une entrée de signal établie vers le circuit bistable (Latch) sur une sortie de signal par le premier comparateur (Comp2) et sur une sortie de signal par le premier circuit logique (NOR1) ayant des entrées qui reçoivent des signaux fournis par le second comparateur (Comp1) et par l'oscillateur à fréquence fixe (Oscillator) ;

et **caractérisé en ce qu'**il comprend en outre un circuit modulateur (Modulator) connecté entre une sortie (D) du circuit bistable (Latch) et une entrée de l'étage pilote (Driver) pour introduire un retard sur un instant de mise en conduction de commutateur de puissance (Pw) par rapport à un ordre de mise à conduction (D) fourni par le circuit bistable (Latch) en réponse à un signal de validation (Latch) en réponse à un signal de validation (C) produit par le circuit de validation (Enabling), et un signal d'entrée du premier amplificateur d'erreur (Error Amp1), et une tension (Vcom) aux bornes du photo-coupleur.

3. Convertisseur continu-continu selon la revendication 2, dans lequel le circuit modulateur (Modulator) comprend :

un troisième comparateur (Comp A) pour comparer la tension (A) sur une entrée du premier amplificateur d'erreur (Error Amp1) à la première tension de référence (Vref) ;

un quatrième comparateur (Comp B) pour comparer la tension d'erreur (B) sur la sortie du premier amplificateur d'erreur (Error Amp1) à la première tension de référence (Vref) ;

un générateur de rampe (Ramp Gen) activé par la commande de mise en conduction (D) fournie sur une sortie du circuit bistable (Latch) ;

un cinquième comparateur (Comp AA) pour comparer la sortie du troisième comparateur (Comp A) à la sortie du générateur de rampe (Ramp Gen) ;

un sixième comparateur (Comp BB) pour comparer la sortie du quatrième comparateur (Comp B) à la sortie du générateur de rampe (Ramp Gen) ;

une première porte logique (OR) ayant des entrées couplées aux sorties des cinquième et sixième comparateurs (Com AA, Comp BB) et une troisième entrée couplée au signal inversé (NOT) fourni par ledit circuit (Enabling) ;

un circuit bistable de sortie (Latch) ayant une entrée de mise à un (S) couplée à la sortie d'une seconde porte logique (AND) ayant une entrée couplée à la sortie de la première porte logique (OR) et une seconde entrée couplée à la commande de mise en conduction (D), et une entrée de remise à zéro (R) pilotée par le signal de sortie inversé de la seconde porte logique (AND) ;

la sortie du circuit bistable (Latch) étant couplée à l'entrée d'un étage pilote (Driver) du commutateur de puissance (Pw) .

N1:N2

**FIG. 1**

N1:N2

Vref1 < Vref2

**FIG. 2**

FIG. 3

FIG. 4

Error Amp. Current (mA)

Vout (Volt)

I (A)

FIG. 5

14

FIG. 6

FIG. 7

16

Error Ampl. Current (mA)

Vout (V)

I (A)

FIG. 8